# EUROPEAN PATENT SPECIFICATION

(11) **EP 1 586 402 B1**
(45) Date of publication and mention of the grant of the patent: **12.02.2014**
(21) Application number: 03774170.9
(22) Date of filing: 25.11.2003
(51) Int. Cl.: B23K 3/02, B22F 7/06

(54) **TIP OF SOLDERING IRON, PROCESS FOR PRODUCING THE SAME, AND ELECTRICAL SOLDERING IRON AND ELECTRICAL SOLDER SUCKING IRON INCLUDING THE IRON TIP**
LÖTKOLBENSPITZE, HERSTELLUNGSVERFAHREN DAFÜR, ELEKTRISCHER LÖTKOLBEN UND ELEKTRISCHER ENTLÖTKOLBEN MIT DER KOLBENSPITZE
POINTE DE FER A SOUDER, SON PROCEDE DE FABRICATION, FER A SOUDER ELECTRIQUE ET ASPIRATEUR DE SOUDURE ELECTRIQUE COMPRENANT LA POINTE A SOUDER

(30) Priority: 26.11.2002 JP 2002342823
(43) Date of publication of application: 19.10.2005
(73) Proprietor: Hakko Corporation, Osaka-shi, Osaka 556-0024 (JP)
(72) Inventor: NAGASE, Takashi, c/o HAKKO CORPORATION, Osaka-shi, Osaka 556-0024 (JP); UETANI, Takashi, c/o HAKKO CORPORATION, Osaka-shi, Osaka 556-0024 (JP); TERAOKA, Yoshitomo, c/o HAKKO CORPORATION, Osaka-shi, Osaka 556-0024 (JP)
(74) Representative: Müller-Boré & Partner Patentanwälte PartG mbB
(86) International application number: PCT/JP2003/014958
(87) International publication number: WO 2004/048024

(56) References cited:
- WO-A-96/05014
- WO-A2-98/34748
- GB-A- 1 284 994
- JP-A- 54 161 509
- JP-A- 54 161 509
- JP-A- 2000 317 629
- US-A- 4 830 260

## Description

### TECHNICAL FIELD

The present invention relates to a soldering bit for an electric soldering iron or an electric solder sucking iron . WO96/05014 A discloses such a soldering bit.

### BACKGROUND ART

Soldering is generally used to connect and join components in the electronic industry. Soldering is broadly divided into mass soldering (batch soldering) and manual soldering.

Mass soldering includes flow soldering by which elements or components are mounted on a printed circuit board and then the board is immersed in a molten solder bath, and reflow soldering by which solder paste, prepared by kneading or mixing solder particles and a flux with the use of a binder (additive), is printed on portions to be joined on a printed circuit board, after which elements or components are mounted on the board and soldered by means of heating. Both are characterized in that multiple points can be soldered simultaneously.

Meanwhile, manual soldering, which has been extensively used, is a soldering method using an electric soldering iron, and is characterized in that it makes the work easy for anyone. Manual soldering using an electric soldering iron is indispensable after mass soldering described above to repair defective soldered portions or to solder components that could not be soldered by means of mass soldering.

The conventional soldering bit of an electric soldering iron is made of copper or a copper alloy, and its forward end is iron-plated with a thickness of several tens to several hundreds micrometers to prevent corrosion by solder. The iron-plated portion is coated with solder, and a soldering work is performed using this portion.

Incidentally, principal components of solder are normally tin and lead (Sn-Pb solder represented by Sn-Pb eutectic solder). However, so-called lead-free solder that does not use lead as a principal component (for example, Sn-Cu solder, Sn-Ag solder, Sn-Ag-Cu solder, etc.) is receiving attentions in recent years due to environmental concerns, and is therefore being used frequently. Lead-free solder, however, generally tends to have poorer solderability (properties to readily achieve satisfactory soldering, such as wettability and ease of spreading of solder) than Sn-Pb solder. Deterioration of wettability of solder is chiefly attributed to the fact that a melting point of lead-free solder is 20 to 45°C higher than that of Sn-Pb solder and the forward end of the soldering bit therefore undergoes oxidation more readily. This reduces soldering workability in manual soldering, and a need for improvements has been arising. In particular, when lead-free solder is used, defective soldering readily occurs with mass soldering and the frequency of repairs tends to increase, which intensifies the need for improvements.

The applicant of the present application has invented a technique to improve solderability while maintaining corrosion resistance by solder on the soldering bit at or nearly as the same level as that on iron-plated articles (see JP-A-2000-317629). The invention in the precedent application improves solderability by applying iron-nickel alloy plating on the forward end of the soldering bit or providing a covering member (bulk material) made of an iron-nickel alloy to the forward end instead of conventional iron plating.

Desoldering for removing solder on unwanted portions is known as a work accompanying with soldering, and an electric solder sucking iron is used for this work. The electric solder sucking iron heats the suction nozzle using heating means, such as a built-in heater, and the forward end of the heated suction nozzle is brought into contact with solder to melt the solder, while molten solder is sucked into the interior through a suction inlet opened at the forward end of the suction nozzle. Suction is performed using suction means, such as a vacuum pump, and molten solder is retained in a tank equipped with a filter and provided at some midpoint in a channel.

Similarly to the soldering bit of the electric soldering iron, the suction nozzle of the electric solder sucking iron also needs to have the function of melting solder when the heated forward end is brought into contact with solder and wettability by solder to ensure heat conductivity, and iron plating is applied to the forward end in the same manner. Also, similarly to the soldering bit of the electric soldering iron, there is a need to prevent corrosion while maintaining wettability by solder even when lead-free solder is used.

Iron-nickel alloy plating as described above can extend the life (it ends when wettability by solder, which has been deteriorated gradually, reaches to the extent that the soldering bit is no longer wetted by solder) against oxidation on the forward end of the soldering bit or the suction nozzle (which are collectively referred to as the tip for handling solder herein); however, the life against corrosion by solder is comparable to that of iron-plated articles. Nevertheless, lead-free solder is characterized in that a quantity of corrosion on the tip for handling solder is large for reasons that its melting point is higher than that of Sn-Pb solder, etc. A life shortened with an increase in quantity of corrosion when lead-free solder is used thus remains as a problem to be solved. A film thickness may be increased by extending a plating time of iron-nickel alloy plating as a countermeasure. However, plating is a process that takes 20 to 30 hours, and extending the processing time further reduces productivity markedly. In addition, because plating waste is an environmental pollutant, the expense of disposal drives up the cost.

In regard to the countermeasure by providing a covering member (bulk material) made of iron-nickel alloy at the forward end of the tip for handling solder, an effect of suppressing an increase in quantity of corrosion can be expected; however, this countermeasure has a problem as follows. In general, wettability by solder and resistance to corrosion by solder tend to be mutually contradictory, and these properties are influenced considerably by materials forming solder and materials forming the soldering iron forward end. It is therefore crucial to find a balance between wettability by solder and resistance to corrosion by solder by taking into account materials forming solder and materials forming the

soldering iron forward end. Conventionally, Sn-Pb solder means Sn-Pb eutectic solder in most cases, whereas lead-free solder has various kinds as specified above. Hence, when a covering member made of iron-nickel alloy is provided at the forward end of the tip for handing solder, there arises a problem that the properties of the covering member vary with the kinds of solder used. An attempt was made to choose materials that best suit the kind of solder used; however, a degree of freedom of choice was so small that a satisfactory result could not be achieved.

The invention was devised in view of the foregoing, and therefore has an object to provide a tip for handling solder capable of preventing corrosion by solder on the tip for handling solder and improving solderability or desolderability when lead-free solder is used, readily obtaining materials of the soldering iron forward end that best suit the respective kinds of solder, and reducing an emission of environmental pollutants, as well as a manufacturing method of the same.

WO 96/05014 discloses a soldering tip comprising 50 to 95 wt.-% of uncoated copper particles and 5 to 50 wt.-% of iron particles, wherein said soldering tip is prepared by a method in which the particles are compacted, sintered and shaped into a soldering tip.

### DISCLOSURE OF THE INVENTION

An invention set forth in Claim 1 is a soldering bit for an electric soldering iron or an electric solder sucking iron comprising a soldering bit core made of copper or copper alloy, characterized in that:
a soldering iron tip end member consisting of a metal particle sintered body is provided at a forward end of the soldering bit core;
the metal particle sintered body is made of a sintering base material at a content by mass of 55% to 99.99%, and a sintering additive;
at least one of iron particles, nickel particles, and cobalt particles are used as the sintering base material; and
the sintering additive including a first sintering additive, and at least one of copper particles, silver particles, tin particles, boron particles, and carbon particles are used as the first sintering additive.

According to this configuration, because the metal particle sintered body is manufacturing using the powder metallurgy process, a degree of freedom of shaping is large, which makes it possible to manufacture the metal particle sintered body in a shape closer to the finished shape. A cutting process can be thus shorter or omitted. In addition, different from the melting process, there is no need to raise the temperature to the melting point of Fe. Hence, energy consumption can be saved and an environmental impact can be therefore lessened. Because disposal of waste, which is necessary in the conventional case of using iron plating, is not necessary, either, adverse effects on the environment can be reduced, which enables power savings and mass production to be achieved.

Also, because the principal component of the metal particle sintered body is iron, or nickel or cobalt that is an element belonging to the same group and having properties closer to those of iron, or a combination of the foregoing, it is possible to obtain a soldering bit having high resistance to corrosion by solder and high wettability by solder. In particular, the metal particle sintered body having a principal component based on iron with an addition of nickel or cobalt can further improve corrosion resistance and wettability by solder in comparison with the metal particle sintered body having iron alone as the principal component.

According to the invention the metal particle sintered body is made of a sintering base material and a sintering additive, and at least one of iron particles, nickel particles, and cobalt particles are used as the sintering base material.

Because it is configured in this manner, the principal component of the metal particle sintered body is made of a sintering basic material using at least one of iron particles, nickel particles, and cobalt particles. By adjusting a mixing ratio of these particles as desired, a required component ratio can be readily achieved.

According to the invention, in a preferred embodiment the iron particles used as the sintering base material are iron powder having a purity of 99.5% or higher.

It is recommendable to use electrolytic iron powder or carbonyl iron dust as such high-purity iron particles. They are iron powder obtained using an electrolysis process or a carbonyl process known as a manufacturing method of metal powder. The electrolysis process is a method by which iron is obtained from an aqueous solution of iron sulfate, iron chloride or the like containing iron by means of electrolysis deposition, and the electrolytic iron powder is pulverized and subjected to finishing reduction. By using electrolytic iron powder, not only is it possible to prevent a reduction in heat and electric conductivities and deterioration in solderability or desolderability due to impurities, but it is also possible to increase a density of the metal particle sintered body. In a case where iron particles contain a large quantity of impurities, such as carbon, oxygen, nitrogen, or hydrogen, a relative density of the metal particle sintered body is reduced to 90% or lower, whereas the relative density can be increased to 96% or higher when high-purity iron powder is used.

The carbonyl process is a method by which carbonyl iron, Fe(CO)₅, is made into powder by adding a moisture vapor for carbonyl iron to be separated into iron and a carbon dioxide gas through heat decomposition. This method is suitable to the manufacturing of fine particles, and carbonyl iron dust is optimum as a component of the sintering base material of the invention.

According to the invention the metal particle sintered body contains the sintering base material at a content of 55% to 99.99%.

When configured in this manner, the properties of the sintering base material used as the principal component act on the tip effectively, which can in turn improve resistance to corrosion by solder and wettability by solder sufficiently. In this specification, when "%" is used for a component ratio, it means "% by mass" unless otherwise specified.

According to the invention the metal particle sintered body is made of the sintering base material and the sintering additive; the sintering additive includes at least a first sintering additive; and at least one of copper particles, silver particles, tin particles, boron particles, and carbon particles are used as the first sintering additive.

When configured in this manner, not only can solderability be further enhanced, but also a high-density metal particle sintered body or a metal particle sintered body having high corrosion resistance can be obtained by means of sintering at a relatively low temperature. Because copper, silver, and tin have relatively low melting points (1083°C, 960°C, and 230°C, respectively), even when the sintering temperature is set to a relatively low temperature, liquid phase sintering can be used, by which the particles are melted to fill in clearances among metal particles during the process of sintering. Because boron interstitially diffuses through Fe group elements and thereby promotes mutual diffusion of solids in solid phase sintering, sintering at a relatively low temperature of 1100°C or below is enabled. Carbon is able to enhance resistance to corrosion by solder and is thereby able to extend the life significantly.

It is preferable to set a content of the first sintering additive in the metal particle sintered body to 0.01% to 40%. When configured in this manner, an optimum quantity to be added can be set without causing an event such that a quantity of the first sintering additive is so small that an effect is insufficient or it is so large that adverse effect is provided.

According to a preferred embodiment the sintering additive includes a second sintering additive; and at least one of vanadium particles, niobium particles, tantalum particles, chromium particles, molybdenum particles, and tungsten particles are used as the second sintering additive.

When configured in this manner, resistance to corrosion by solder on the tip for handling solder can be enhanced. By adding vanadium, niobium, and tantalum belonging to the V-A group in the periodic table, or chromium, molybdenum, and tungsten belonging to the VI-A group, particles having high melting points are diffused through the sintered body matrix, and exceptionally high corrosion resistance can be expected, which can in turn extend the life markedly.

In addition, carbon used as the first sintering additive enhances the corrosion resistance, but deteriorates wettability by solder of the soldering bit with relative ease. Hence, when a large quantity of carbon cannot be used in order to ensure wettability by solder, it is effective to use the second sintering additive as means for further improving corrosion resistance.

It is suitable to set a content of the second sintering additive in the metal particle sintered body to 0.01% to 5%. When configured in this manner, an optimum quantity to be added can be set without causing an event such that a quantity of the second sintering additive is so small that an effect is insufficient or it is so large that wettability by solder is deteriorated significantly.

In a preferred embodiment the metal particle sintered body is formed in a shape of a cap to be capped on the forward end of the soldering bit core and has a thickness of 200 to 800 µm.

When configured in this manner, the tip for handling solder can be manufactured readily in a short time by merely capping the soldering iron tip end member formed of a cap-shaped metal particle sintered body on the forward end of the soldering bit core and then joining them by means of brazing or the like. Moreover, because the metal particle sintered body is as thin as 200 to 800 µm, even when it is used directly as the soldering iron tip end member without any additional processing, it is still possible to ensure heat conductivity from the soldering bit core to solder in a satisfactory manner.

Preferably, the metal particle sintered body has a density of 95% or higher.

By using a high-density metal particle sintered body in this manner, corrosion resistance can be enhanced further. It is suitable to mold a green compact by means of injection molding described below as a method of manufacturing a metal particle sintered body having a density as high as or higher than 95%.

In regard to an electric soldering iron or an electric solder sucking iron provided with the tip for handling solder whose resistance to corrosion by lead-free solder has been improved and whose solderability and desolderability (hereinafter, referred to as solderability and the like) have been enhanced as described above, the life of the main body can be extended for those in which the tips for handling solder are directly fixed to the main bodies, and a replacing cycle can be extended for those in which the tips for handling solder are attached to the main body in a replaceable manner . In addition, work efficiencies can be enhanced due to high solderability and the like.

In a case where the tip for handling solder is replaceable, a heating portion, such as a heater, may be provided to the main body side, or alternatively, the tip for handling solder may be provided with a heating element that electrically heats the soldering iron tip end member via the soldering bit core.

When configured in this manner, it is possible to adapt a heating element having optimum properties (for example, a capacity of the heater) depending on the shape, the size and the purpose of use of the tip for handling solder to an individual tip for handling solder, which can in turn further enhance the work efficiencies.

The present invention also relates to a manufacturing method of the tip for handling solder as described above, and the method is characterized by including: kneading or mixing the sintering base material or the sintering base material and the sintering additive using a binder; forming a green compact by molding a resulting mixture to substantially an identical shape with a shape of the soldering iron tip end member or a shape surrounding the shape of the soldering iron tip end member by means of pressure molding; sintering the green compact in a non-oxidative atmosphere at 800 to 1300°C to form the soldering iron tip end member formed of a metal particle sintered body; and joining the soldering iron tip end member to the forward end of the soldering bit core made of copper or a copper alloy.

When configured in this manner, a metal particle sintered body made of the sintering base material or the sintering base material and the sintering additive can be readily manufactured. The tip for handling solder can be readily manufactured by merely machining the metal particle sintered body as needed, and joining the metal particle sintered body to the forward end of the soldering bit core by means of brazing or the like.

Preferably, the metal particle sintered body is further shaped by means of preform forging or powder forging at a temperature of 300 to 500°C to form the soldering iron tip end member.

When configured in this manner, a density can be increased by causing fine air pores among particles in the metal particle sintered body to shrink, and high corrosion resistance can be thereby achieved.

In a further embodiment of the invention injection molding is used instead of the pressure molding.

When configured in this manner, even a relatively complex shape, which is difficult to achieve by means of generally used molding pressing, can be readily conferred to a green compact. Known MIM (Metal Injection Molding) is suitable as such a metal powder injection molding method. With the use of MIM, a degree of freedom of shape can be increased, and molding at a high degree of accuracy can be achieved. For example, even for a cap-shaped thin soldering iron tip end member having a thickness on the order of 200 to 800 µm, a metal particle sintered body having the identical shape as that of the finished article can be obtained. In short, because additional machining can be omitted, productivity can be enhanced and the cost can be saved.

In addition, a high-density metal particle sintered body can be obtained using particles of a small particle size. For example, a density achieved by means of mold pressing using particles having a particle size on the order of 80 µm is 90% or lower, whereas a density achieved by means of MIM using particles having a particle size of 10 µm or smaller is 95% or higher (for example, 96 to 99%).

Incidentally, the conventional mold pressing and MIM normally use an organic binder for molding to confer appropriate fluidity in promoting diffusion and for injection molding. The binder, however, is difficult to remove completely in the removing step (normally the heating at temperatures on the order of 400 to 600°C after the molding) and in the calcining or sintering step, and therefore readily resides in the metal particle sintered body. When such a metal particle sintered body is used as a soldering bit, the residual binder reacts with oxygen in atmosphere and generates carbides or the like, which may possibly deteriorate solderability and the like.

In another embodiment of the invention a process of subjecting metal particles alone to powder compression molding without kneading or mixing using the binder is used instead of the pressure molding.

When configured in this manner, because no binder is used, deterioration of solderability as described above can be prevented in a reliable manner. In addition, because there is no need to remove the binder, defects, such as swelling, cracking, voids, or deformation, that may possibly occur during the removing step can be prevented in a reliable manner.

Known RIP (Rubber Isostatic Pressing) is suitable as powder compression molding using no binder. RIP is a powder molding process by which a cavity in a rubber mold is filled with powder and the powder together with the rubber mold is subjected to compression molding using a top punch and a bottom punch. When the powder is compressed, it is compressed not only in the pressing axis direction, but also in the side surface direction due to deformation of the rubber mold. Neither the binder nor a mold lubricant is needed during molding, and because a degree of freedom of shape or size is high, molding at a high degree of accuracy can be achieved.

In still another embodiment of the invention liquid phase sintering is used, by which a sintering temperature is set at or above a melting point of the sintering additive.

When configured in this manner, it is possible to obtain a high-density metal particle sintered body by means of sintering at relatively low temperatures. According to the liquid phase sintering, particles having low melting points melt during the process of sintering and fill in clearances among metal particles. A high-density metal particle sintered body can be thus obtained, which in turn makes it possible to achieve excellent solderability or desolderability. In addition, because sintering is performed at relatively low temperatures, a contribution to power saving can be made.

In a preferred embodiment, alloy particles, formed by alloying at least two kinds of particles among particles used as the sintering base material and the sintering additive using a melting process or mechanical alloying, are used.

When configured in this manner, because particles that have been alloyed previously are used, homogeneity of the texture can be enhanced. Also, because the kneading or mixing step of metal particles can be simpler, productivity can be improved. Mechanical alloying is a known method of manufacturing alloy powder using machines, such as a ball mill, without melting metals. Because alloying is performed at normal temperature by means of mechanical alloying, alloy particles can be readily manufactured from metals having a large difference of melting points.

Preferably, particles having a particle size of 200 µm or smaller are used as the sintering base material, the sintering additive, or the alloy particles.

When metal particles having such a small particle size are used, a density of the metal particle sintered body can be increased, and solderability or desolderability as well as corrosion resistance on the tip for handling solder can be enhanced. It is preferable that the particle size is made further smaller to be 50 µm or smaller, and furthermore smaller to be 10 µm or smaller. In particular, iron particles having a particle size of 10 µm or smaller are suitable as carbonyl iron dust, and are also suitable for MIM to be performed. In addition, by reducing the particle size further and using ultra-fine particles (so-called nanoparticles), a density can be increased further.

### BRIEF DESCRIPTION OF THE DRAWINGS

FIG. 1 is a partial front view of an electric soldering iron according to a first embodiment of the invention;
FIG. 2 is an exploded perspective view of FIG. 1;
FIG. 3 is a cross section of a soldering bit according to the first embodiment of the invention;
FIG. 4 is an exploded perspective view of FIG. 3;
FIG. 5 is a component table of particles used when a metal particle sintered body is manufactured;
FIG. 6 is a flowchart detailing the manufacturing of a tip for handling solder;
FIG. 7 is an exploded perspective view of a modification of the soldering bit of the first embodiment;
FIG. 8 is a flowchart detailing the manufacturing of a tip for handling solder;
FIG. 9 is a partial perspective view of a modification of the soldering bit of the first embodiment;
FIG. 10 is a schematic cross section showing the mechanism of liquid phase sintering;
FIG. 11 is a partial cross section of a modification of the soldering bit of the first embodiment;
FIG. 12 is a perspective view of a modification of the soldering bit of the first embodiment;
FIG. 13 is a view used to describe test procedures of a wet spreading test;
FIG. 14 is a graph showing the test results of the wet spreading test;
FIG. 15 is a view used to describe test procedures of a life test;
FIG. 16 is a graph showing the test results of the life test;
FIG. 17 is a partial cross section of an electric solder sucking iron according to a second embodiment of the invention; and
FIG. 18 is an enlarged cross section showing the vicinity of a suction nozzle of the second embodiment.

### BEST MODE FOR CARRYING OUT THE INVENTION

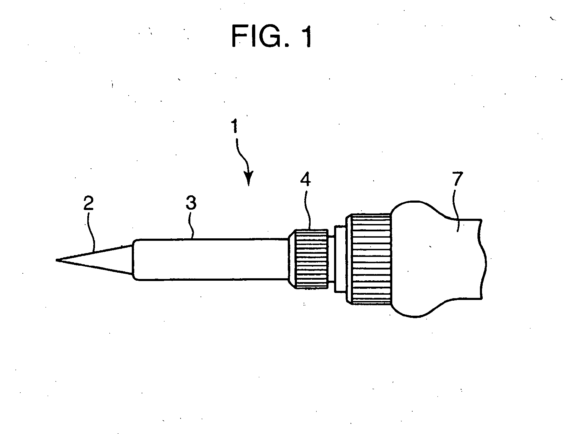

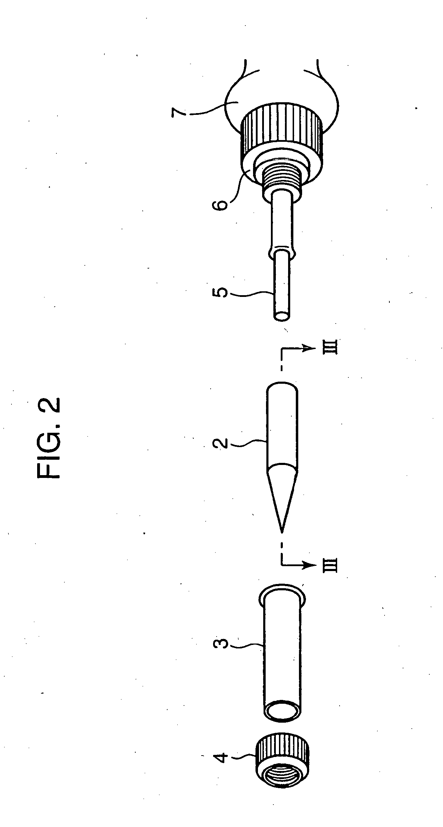

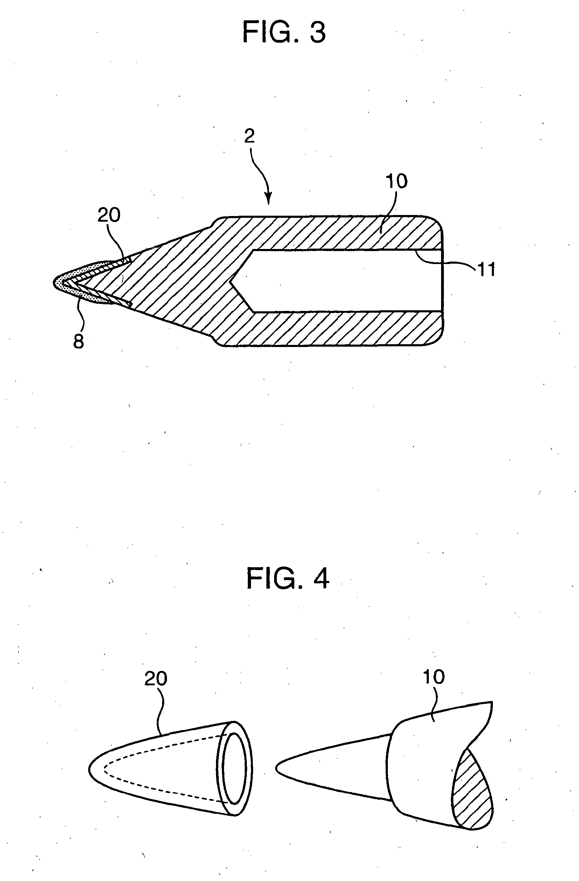

A first embodiment of the invention will now be described with reference to FIG. 1 through FIG. 16. FIG. 1 is a front view showing the vicinity of the forward end of an electric soldering iron 1, and FIG. 2 is an exploded perspective view of FIG. 1. A soldering bit 2 (equivalent to the tip for handling solder), which is housed in a protective pipe 3 with its conical forward end protruding from the protective pipe 3, is provided at the forward end of the electric soldering iron 1. The protective pipe 3 is fixed onto a nipple 6 of the electric soldering iron 1 with a cap nut 4. The soldering bit 2 is provided with a cavity 11 (see FIG. 3) on the inside of the cylindrical barrel covered with the protective pipe 3. A ceramic heater 5 protruding from a main body 7 of the electric soldering iron 1 is assembled so as to fit in the cavity 11. The ceramic heater 5 is a heating element that generates heat when an unillustrated power supply switch is turned ON, and is configured to maintain a predetermined adjustable temperature range using an unillustrated thermostat mechanism.

FIG. 3 is a cross section of the soldering bit 2 taken along the line III - III of FIG. 2, and FIG. 4 is an exploded perspective view of the forward end of the soldering bit 2. The soldering bit 2 chiefly comprises a soldering bit core 10 having a cylindrical barrel and a conical forward end, and a soldering iron tip end member 20 brazed to the forward end. A material forming the soldering bit core 10 is copper or a copper alloy that is relatively inexpensive and has high heat conductivity and electric conductivity. Thin chromium plating is applied onto an exposed portion on the outside of the bit core 10. The soldering iron tip end member 20 is a portion whose surface is brought into direct contact with solder to melt the solder. In normal use, the forward end of the soldering iron tip end member 20 is covered with a solder layer 8 . The soldering iron tip end member 20 is a member having iron as a principal component and further containing nickel, cobalt, copper, silver, tin, boron, carbon, vanadium, niobium, tantalum, chromium, molybdenum, and tungsten selectively at their respective predetermined contents, and it comprises a metal particle sintered body manufactured using a powder metallurgy process. The composition and a manufacturing method thereof will be described in detail below. The shape of the soldering iron tip end member 20 can vary with manufacturing methods. Modifications of the shape will be also described below.

In the electric soldering iron 1 of the structure described above, the ceramic heater 5 starts generating heat when the unillustrated power supply switch is turned ON. The heat is transmitted quickly and efficiently onto the surface of the soldering iron tip end member 20 from the cavity 11 in the soldering bit 2. When the temperature of solder exceeds the melting point, solder in the solder layer 8 on the soldering iron tip end member 20 starts to melt, and the molten solder together with newly supplied solder is used for soldering.

In this instance, because the forward end of the soldering iron tip end member 20 is covered with the solder layer 8, the molten solder layer 8 serves as a medium for heat and supplies heat to portions to be soldered during soldering, which enables satisfactory soldering to be achieved. For the solder layer 8 to be formed, the soldering iron tip end member 20 needs to have a property to be readily wetted by solder, that is, so-called high wettability by solder, and wettability by solder is an important property to achieve satisfactory soldering. The reason why is because when the soldering iron tip end member 20 has no wettability by solder, a channel to supply heat to the portions to be soldered is limited to a contact point with the soldering iron tip end member 20 alone, which deteriorates heat transmission significantly and thereby makes it impossible to achieve satisfactory soldering.

As soldering is performed a number of times, a phenomenon known as "eaten by solder" occurs, by which the surface of the soldering iron tip end member 20 is corroded by solder. It is preferable that a quantity of corrosion is small; however, because a quantity of corrosion increases with increasing temperatures, lead-free solder having a high melting point is disadvantageous compared to Sn-Pb solder. In addition, even at the same temperature, a quantity of corrosion is generally larger in lead-free solder than in Sn-Pb solder for reasons that a tin content is higher, etc. In comparison with conventional iron plating, the soldering iron tip end member 20 has a sufficiently large thickness, and corrosion resistance and the life have been improved markedly. It should be noted, however, that because a quantity of deterioration in heat conductivity is increased when the thickness is too large, a thickness on the order of 200 to 800 µm is suitable.

Temperature control of the soldering bit is important during soldering, and the temperature of the soldering bit in use is adjusted to be approximately 340°C when Sn-Pb eutectic solder is used, and approximately 380°C when lead-free solder is used (in the case of Sn-0.7%Cu solder). When the temperature is raised exceedingly, or soldering is performed a number of times, the surface of the soldering bit turns to black and wettability by solder is lost, at which point the soldering bit has reached the end of its life. In such a case or when the shape or the materials of the soldering bit need to be changed depending on the purpose of use, the soldering bit 2 can be readily replaced by loosening the cap nut 4 to disassemble the soldering bit 2 as in the state shown in FIG. 2.

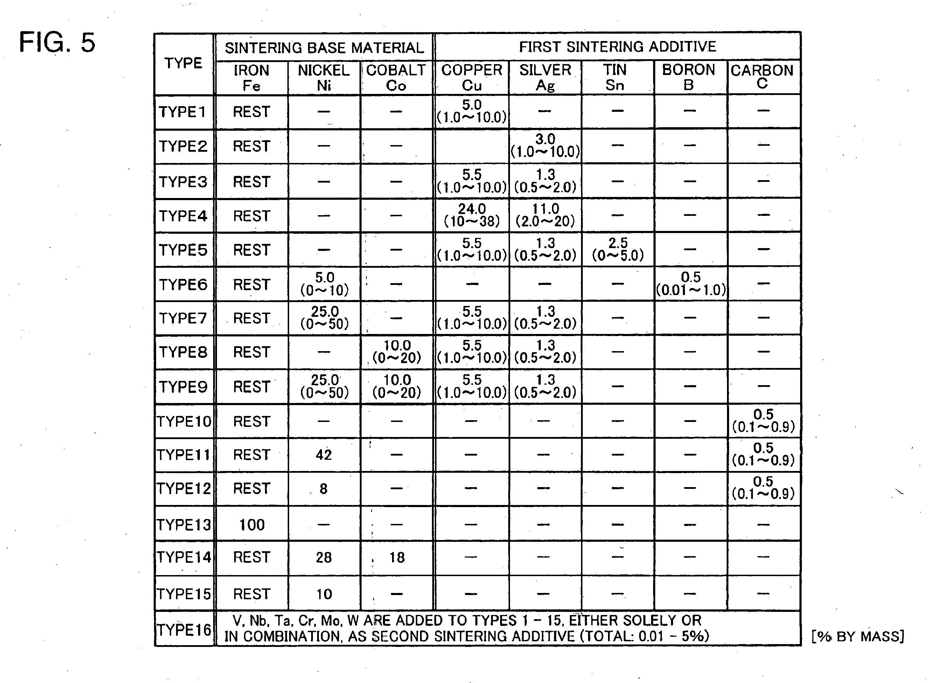

Components of the soldering bit 2 will now be described. FIG. 5 is a component table showing contents by mass (%) of particles used when manufacturing a metal particle sintered body that will be made into the soldering iron tip end member 20. The ordinate of the table indicates types identifying combinations of particles. Herein, 16 types are shown; however, they may be other suitable combinations within the scope of the appended claims. The abscissa indicates the kinds of particles used, which are consequently components of the metal particle sintered body. The kinds of particles are broadly classified into a sintering base material and a sintering additive. The sintering additive is further classified into a first additive and a second additive. At least one of iron (Fe), nickel (Ni), and cobalt (Co) is selected as particles of the sintering base material. The metal particle sintered bodies of Types 13 through 15 comprise the sintering base material alone. For those of Types 1 through 12, at least one of copper (Cu), silver (Ag), tin (Sn), boron B, and carbon (C) is selected as particles of the first sintering additive in addition to the sintering base material. For the metal particle sintered body of Type 16, at least one of vanadium (V), niobium (Nb), tantalum (Ta), chromium (Cr), molybdenum (Mo), and tungsten (W) is selected as particles of the second sintering additive and added to the respective components in Types 1 through 15.

In each row for Types 1 through 15, the upper half indicates % by mass of respective particles on the basis of a total mass of all particles used, and the lower half indicates a suitable range in parentheses (omitted for some Types). For example, contents in Type 3 are Fe-5.5%Cu-1.3%Ag. Suitable ranges for the respective components are Cu: 1 to 10%, Ag: 0.5 to 2%, and the rest for Fe. The same notation applies for the other types. Quantities of these particles to be used can be determined within the suitable ranges for the respective particles; however, when the sintering additive is used, contents are adjusted so that a total of the sintering base material is in the range of 55 to 99.99%, and a total of the first sintering additive is in the range of 0.01 to 40% and/or a total of the second sintering additive is in the range of 0.01 to 5%. For example, for the sintering additives in Type 4, quantities to be used can be determined within the ranges of Cu: 10 to 38% and Ag: 2 to 20%; however, quantities to be used are adjusted so that a total thereof will not exceed 40%.

Because Fe has excellent resistance to corrosion by solder, Fe particles are the principal component in the sintering base material. Fe particles are therefore used in all of Types 1 through 16. In particular, Fe particles alone are used in Type 13. It should be noted, however, that as is known in the conventional iron plating, because impurities in Fe give adverse effects on solderability, high-purity Fe particles are preferable. For example, iron powder having a purity of 99.5% or higher (these can be obtained by known electrolytic process or carbonyl process) is suitable. By increasing the purity of Fe particles, not only is it possible to prevent deterioration of solderability and a decrease in heat and electric conductivities, but it is also possible to increase a density of the metal particle sintered body. When Fe particles contain a large quantity of impurities, such as carbon (C), oxygen (O), nitrogen (N), or hydrogen (H), the relative density of the metal particle sintered body is 90% or lower, whereas the relative density can be increased to 96% or higher when high-purity iron powder is used.

As the sintering base material, Ni particles and Co particles are additionally selected as needed. Ni and Co are in the Fe group belonging to the VIII group in the periodic table. Ni particles and Co particles therefore have properties similar to those of Fe particles, and can be used as an alternative base material to Fe; moreover, in some combinations, they exhibit more excellent properties than in the case of using single Fe particles. Ni particles are used in Types 6, 7, 9, 11, 12, 14, and 15, Co particles are used in Types 8, 9, and 14, and both are used in Types 9 and 14.

An Fe-Ni sintered alloy, using Fe particles and Ni particles as the sintering base material, can improve solderability in comparison with sintered articles using Fe alone (see the wet spreading test described below). A quantity of Ni particles to be added in this instance is preferably 50% or smaller. When the quantity exceeds 50%, corrosion resistance is deteriorated, which allows corrosion by solder to advance rapidly.

An Fe-Co sintered alloy, using Fe particles and Co particles as the sintering base body, functions not only to promote a degree of sintering, but also to suppress corrosion by solder. A quantity of Co particles to be added in this instance is preferably 20% or smaller. When the quantity exceeds 20%, solderability is deteriorated and the cost is increased.

Using 1 to 10% of Cu particles as the sintering additive (Types 1, 3, 4, 5, 7, 8, and 9) is quite effective, because solderability can be improved (see the wet spreading test described below), and a high-density Fe-Cu sintered alloy can be obtained by means of liquid phase sintering. As will be described below, liquid phase sintering (in the case of Cu) is a method for turning Cu into a liquid phase during the sintering process by setting the sintering temperature at or above the melting point of Cu, that is, 1083°C. An adequate quantity of Cu particles to be added is 1 to 10%. When the quantity is less than 1%, Cu particles have only a little effect, and when the quantity exceeds 10%, Cu particles melt locally during the liquid phase sintering, which readily gives rise to deformation on the molded article.

An Fe-Cu sintered alloy, to which 10% or more of Cu particles are added (Type 4), may be used. In this case, however, the sintering temperature is set at or below the melting point of Cu for the reasons described above. When configured in this manner, although corrosion resistance is deteriorated slightly, heat conductivity and solderability are enhanced. This is therefore suitable in a case where priorities are placed on solderability rather than on corrosion resistance. In addition, the Fe-Cu sintered alloy having a large quantity of Cu particles is characterized in that a deterioration in heat conductivity is less than that in an Fe-Cu alloy manufactured using the melting process. For example, electric conductivity of an Fe-50%Cu alloy manufactured using the melting process is 20% IACS or lower, whereas the Fe-Cu sintered alloy shows electric conductivity as high as 50% IACS. This relation is also directly proportional with heat conductivity. A quantity of Cu particles to be added is preferably 40% or smaller. When the quantity exceeds 40%, corrosion resistance is deteriorated, which allows corrosion by solder to advance quickly.

When Ag particles are used as the first sintering additive (Types 2 through 5 and 7 through 9), a high-density Fe-Ag sintered alloy can be obtained by means of liquid phase sintering at a further lower temperature than in the case of using Cu particles alone, because the melting point of Ag, which is 960°C, is lower than that of Cu. For the Fe-Cu sintered alloy (Type 4) using a large quantity of Cu particles, particles having a low melting point of Ag-28%Cu (eutectic temperature: 780°C) may be used. A suitable quantity of Ag particles or Ag-Cu particles to be added is 0.5 to 20%, and when the quantity exceeds 20%, the cost is increased markedly.

When Sn particles are used as the first sintering additive (Type 5), solderability can be improved; moreover, because the melting point of Sn is as low as 230°C, liquid phase sintering at a further lower temperature is enabled. Similarly to Type 5, it is effective to add Sn particles together with Cu particles and Ag particles. A suitable quantity of Sn particles to be added is 5% or smaller, and when the quantity exceeds this value, compounds, such as FeSn₂, are produced, which makes the metal particle sintered body brittle.

When B particles are used as the first sintering additive (Type 6), sintering is enabled at a relatively low temperature of 1100°C or below, because B interstitially diffuses through Fe group elements and thereby promotes mutual diffusion of solids. Adding a small quantity of B particles is characterized in that solderability is hardly deteriorated, and a suitable quantity to be added is 0.01 to 1%. When the quantity is less than this range, B particles have only a little effect, and when the quantity exceeds this range, solderability is readily deteriorated. Other than adding single B particles, particles of alloys containing B, such as Fe-B particles, Ni-B particles, or Cu-B particles, may be added.

When C particles on the order of 0.5 (through 0.8)% are used as the first sintering additive (Types 10 through 12), corrosion resistance of the soldering bit 2 is enhanced markedly, which can in turn extend the life significantly.

When at least one of vanadium particles, niobium particles, tantalum particles, chromium particles, molybdenum particles, and tungsten particles are used as the second sintering additive, particles having high melting points are diffused through the sintered body matrix, and exceptionally high corrosion resistance can be expected, which can in turn extend the life of the soldering bit significantly. In a case where a large quantity of carbon cannot be used in order to ensure wettability by solder, it is effective to use the second sintering additive as means for further improving corrosion resistance.

As metal particles used as the sintering base material and the sintering additive described above, those having a particle size of 200 µm or smaller, preferably 50 µm or smaller, and more preferably 10 µm or smaller, are suitable, and ultra-fine particles (so-called nanoparticles) are furthermore preferable. By using these metal particles having small particle sizes, it is possible to increase a density of the metal particle sintered body, which can in turn enhance solderability and corrosion resistance.

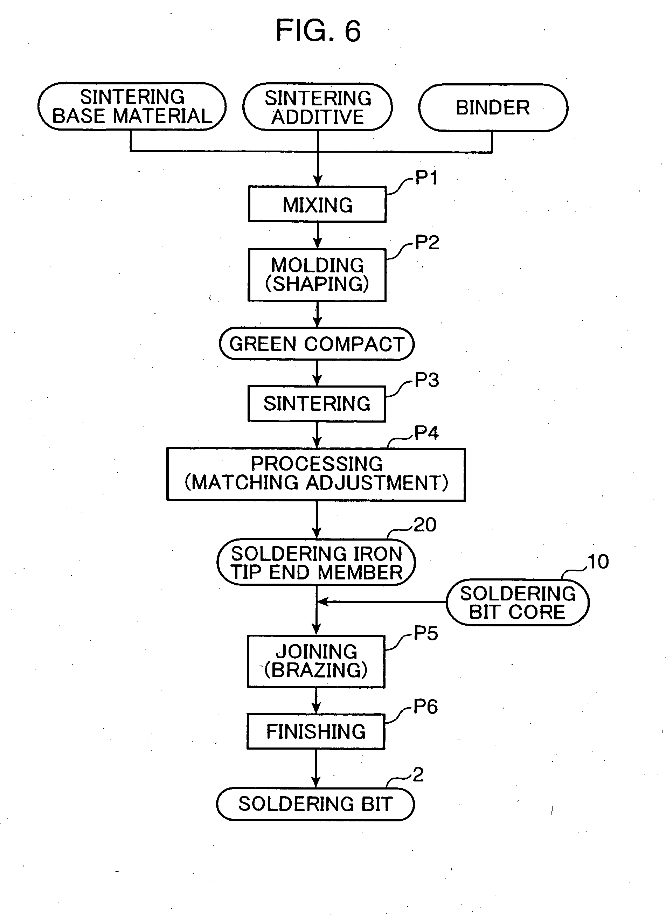

A manufacturing method of the soldering bit 2 will now be described. FIG. 6 is a flowchart detailing the manufacturing of the soldering bit 2. In Step P1, the sintering base material, the sintering additive, and a binder (additive) are kneaded or mixed in a mixer. Subsequently, in Step P2, the resulting mixture is pressure molded by means of press molding, MIM (metal powder injection molding) or the like to form a green compact (shaping). The shape of the green compact is substantially identical with that of the soldering iron tip end member 20. Thereafter, the green compact is removed from the mold, and in Step P3, the green compact is calcined and sintered in a non-oxidative atmosphere at a predetermined temperature (800 to 1300°C) to form a metal particle sintered body. In subsequent Step P4, the resulting metal particle sintered body is machined to adjust the matching with the soldering bit core 10 to complete the soldering iron tip end member 20. Subsequently, in Step P5, the soldering iron tip end member 20 is joined to the forward end of the soldering iron bit core 10 by means of brazing. Brazing is performed at 650 to 850°C using silver solder, BAg-7 or BAg-8. Other than brazing, pressure welding or the like is applicable for joining. Finally, in Step P6, finishing is performed to adjust dimensional accuracy, at which point the soldering bit 2 is completed.

A powder metallurgy process for manufacturing the soldering iron tip end member 20 by means of sintering as described above has so a high degree of freedom in shaping that the soldering iron tip end member 20 can be manufactured in a shape closer to the finished shape, which makes it possible to shorten or eliminate the machining process. In addition, different from the melting process, there is no need to raise the temperature to the melting point of Fe. Hence, energy consumption is saved and an environmental impact is therefore lessened. Because disposal of waste, which is necessary in the conventional case of using iron plating, is not necessary, either, adverse effects on the environment can be reduced, which enables power savings and mass production to be achieved.

In particular, by applying MIM to the molding in Step P2, a degree of freedom of shape can be increased, and molding at a high degree of accuracy can be achieved. For example, a metal particle sintered body of the identical shape as that of the finished article can be obtained by molding the soldering iron tip end member 20 having a thickness on the order of 200 to 800 µm at a high degree of accuracy. In short, because additional machining can be omitted, productivity can be enhanced while the cost is saved.

Also, when MIM is applied, it is possible to obtain a high-density metal particle sintered body with the use of particles having a small particle size. For example, a density as high as 96 to 99% can be achieved with the use of particles having a particle size of 10 µm or smaller (electrolytic iron powder or carbonyl iron dust is suitable).

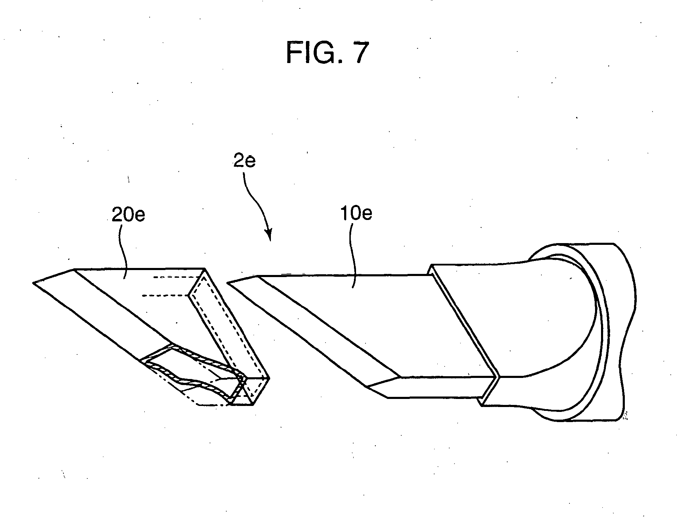

FIG. 7 is an exploded perspective view of a suitable soldering bit 2e molded by means of MIM. The forward end of a soldering bit core 10e is formed in the shape of a knife edge, and a soldering iron tip end member 20e is shaped like a cap (thickness: 200 to 800 µm) so that it is capped on the soldering bit core 10e. Even when the soldering iron tip end member 20e is thin and of a shape having a sharp angle or a deep cavity, it can be molded in the shape of a finished article by means of MIM. In short, because additional machining can be omitted, productivity can be enhanced while the cost is saved.

The sintering base material, the sintering additive, and the binder are kneaded or mixed in Step P1 in FIG. 6; however, the binder may be omitted by applying a known process, such as RIP (Rubber Isostatic Pressing). RIP is a powder molding process by which a cavity in a rubber mold is filled with powder and the powder together with the rubber mold is subjected to compression molding using a top punch and a bottom punch. When the powder is compressed, it is compressed not only in the pressing axis direction, but also in the side surface direction due to deformation of the rubber mold. Because neither the binder nor a mold lubricant is needed during molding, it is possible to prevent adverse effects resulted from the use of the binder (such as deterioration in solderability caused by residual binder) in a reliable manner. In addition, because a degree of freedom of shape and size is high, molding at a high degree of accuracy can be achieved.

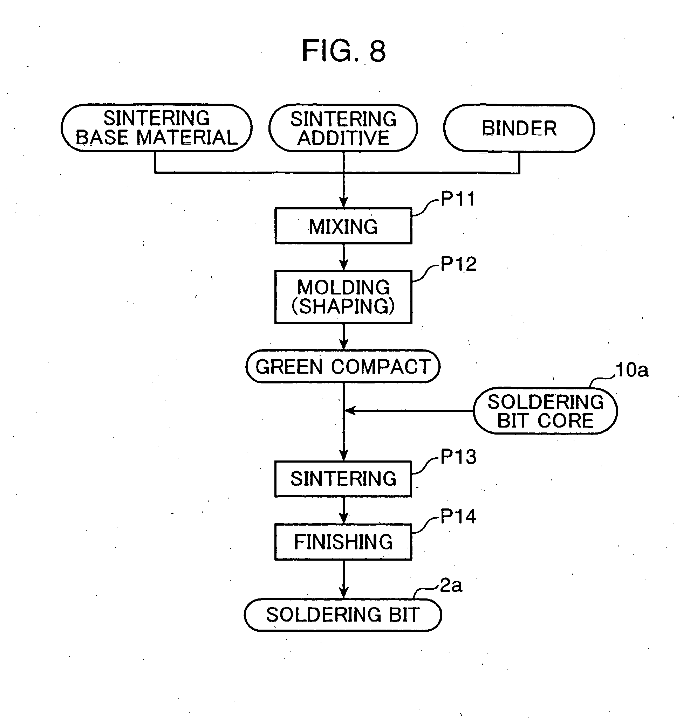

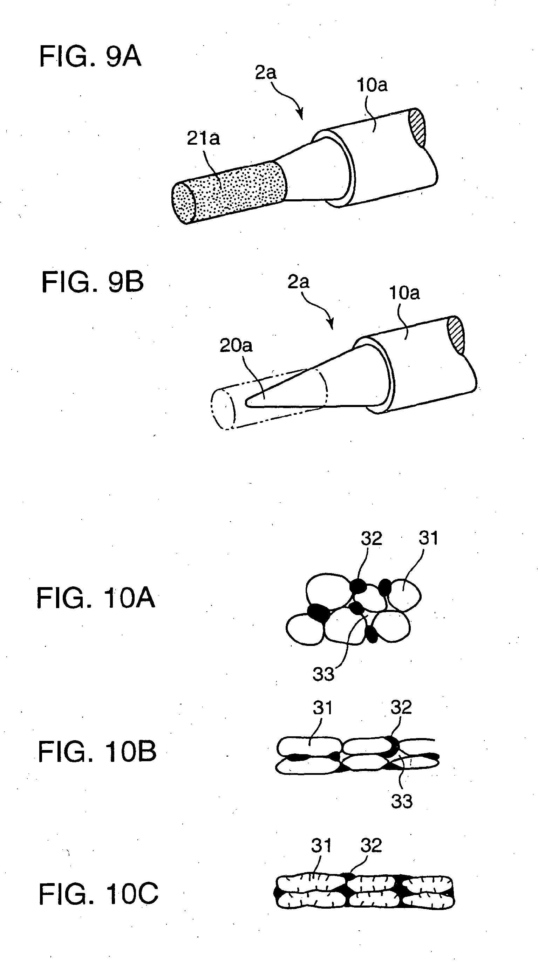

There are many other manufacturing methods using the powder metallurgy process. FIG. 8 is a flowchart detailing the manufacturing of a soldering bit 2a shown in FIG. 9 by performing both sintering and joining of a metal particle sintered body 21a to the soldering bit core simultaneously. In Step P11, the sintering basic material, the sintering additive, and the binder are kneaded or mixed in a mixer. Subsequently, in Step P12, the resulting mixture is pressure molded by means of press molding, MIM or the like to form a green compact (shaping). The green compact is of a cylindrical shape that is substantially identical with the shape of the metal particle sintered body 21a of FIG. 9A. Thereafter, the green compact is removed from the mold and brought into close contact with the forward end of the soldering bit core 10a. In Step P13, the green compact is calcined and sintered in a non-oxidative atmosphere at a predetermined temperature (800 or higher and at or below the melting point of the soldering bit core made of copper or a copper alloy), so that the metal particle sintered body 21a is formed and simultaneously joined to the soldering bit core 10a (the state of FIG. 9A) . Finally, in Step P14, finishing is performed to adjust a dimensional accuracy, at which point the soldering bit 2 is completed (the state of FIG. 9B).

When configured in this manner, the step of joining the soldering iron tip end member 20a and the soldering bit core 10a by means of brazing or the like can be omitted, which can in turn enhance productivity.

Low-pressure molding without applying pressure is applicable to the molding shown in Step P2 of FIG. 6 or Step P12 of FIG. 8; however, a density of the green compact is higher when pressure molding is used, and a density of the metal particle sintered body formed by sintering this green compact can be higher. In addition, a metal particle sintered body having a further higher density can be obtained by means of liquid phase sintering. Liquid phase sintering is a method for performing sintering with the use of particles having relatively low melting points (Cu particles, Ag particles, Ag-28%Cu eutectic particles (eutectic temperature: 780°C), Sn particles, etc.) as the sintering additive at a temperature as high as or higher than the melting points of these particles.

FIG. 10 is a schematic cross section showing the mechanism of liquid phase sintering. FIG. 10A shows a state before the application of pressure in Step P2 of FIG. 6 or Step P12 of FIG. 8. As is shown in this drawing, particles 32 of the sintering additive are diffused through and mixed with particles 31 of the sintering base material before the application of pressure, and relatively large air spaces 33 are present. FIG. 10B shows a state after the pressure molding in Step P2 or Step P12. As is shown in this drawing, the particles 31 of the sintering base material and the particles 32 of the sintering additive are flattened as a result of plastic deformation after the pressure molding; although particles are brought into close contact with each other, small air spaces 33 are still present. FIG. 10C shows a state after the liquid phase sintering is performed in Step P3 of FIG. 6 or Step P13 of FIG. 8. As is shown in this drawing, the particles 31 of the basic sintering material are grown through recrystallization, and air spaces are filled with particles 32 of the sintering additive, thereby enhancing the denseness. This is attributed not only to solid diffusion among the basic material particles 31, but also to an event that the particles 31 of the sintering base material undergo a wetting phenomenon as the particles 32 of the sintering additive are melted at the sintering temperature while at the same time the air spaces 33 are filled with the liquid due to a boundary tension.

As has been described, a high-density metal particle sintered body can be obtained by means of liquid phase sintering; moreover, because sintering can be performed at a relatively low temperature in comparison with a case where the liquid phase sintering is not used, it can contribute to power savings.

The metal particle sintered body may be shaped further by means of preform forging or powder forging at temperatures of 300 to 500°C to form the soldering iron tip end member. Because these are generally known methods, detailed descriptions thereof are omitted herein; however, when these methods are used, it is possible to increase a density by causing fine air pores among particles to shrink.

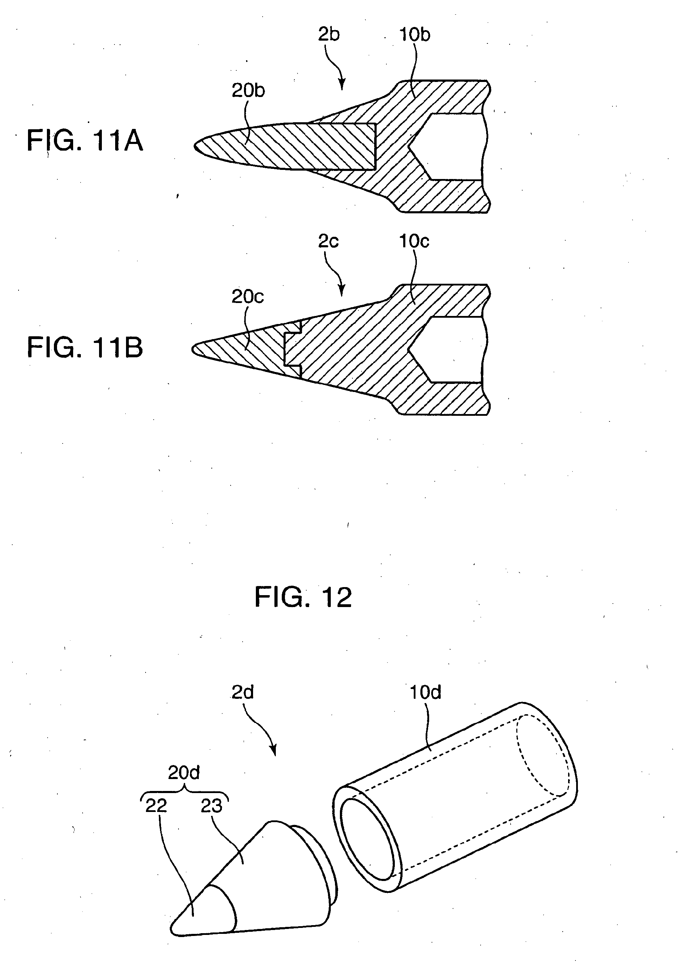

Molding and sintering may be performed in a process including cold isostatic pressing (CIP) or hot isostatic pressing (HIP) as other sintering methods. Because these are also generally known methods, detailed descriptions thereof are omitted herein; however, when these methods are used, the metal particle sintered body is plastically processed in the shape of a rod or a filament, which is further machined to form the soldering iron tip end member 20. FIGs. 11A and 11B are cross sections of the forward end of the soldering bit thus obtained. Soldering bits 2b and 2c are obtained by joining, respectively, soldering iron tip end members 20b and 20c obtained by means of CIP or HIP to the forward ends of soldering bit cores 10b and 10c by means of brazing.

As still another sintering method, double-layer sintering may be used. FIG. 12 is an exploded perspective view of a soldering bit 2d when double-layer sintering is used. A soldering iron tip end member 20d comprises a first layer 22 and a second layer 23. The first layer 22 is made of a mixture of the sintering basic material and the sintering additive, and the second layer 23 is formed by sintering Cu particles or Cu-Cr particles. The soldering iron tip end member 20d comprises a metal particle sintered body having two layers as described above, and it can be directly shaped, or alternatively, after a sintered body like the metal particle sintered body 21a shown in FIG. 9A is formed, the sintered body can be machined to form the soldering iron tip end member 20d shown in FIG. 12. The soldering bit 2d can be obtained by brazing the soldering iron tip end member 20d to a soldering bit core 10d comprising a copper pipe. Using a copper pipe as the soldering bit core 10d can omit inner surface processing, and power can be saved.

Evaluation results of solderability of the soldering bit 2 of this embodiment will now be described. Evaluations were made employing a wet spreading test.

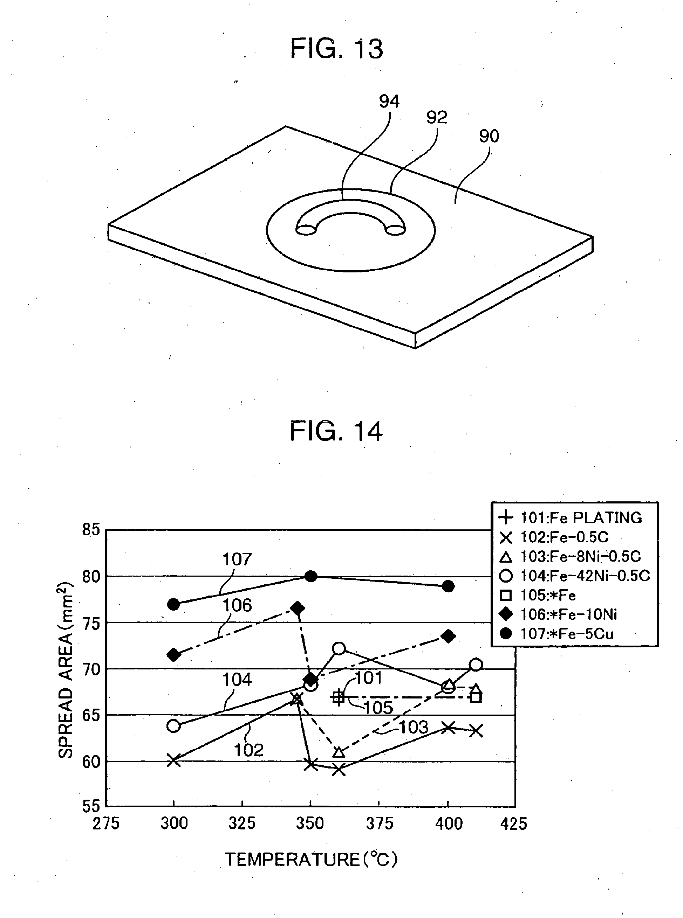

FIG. 13 is a view used to describe test procedures of the wet spreading test. A test specimen 90 is a metal particle sintered body of a size: 15.8 mm x 21.4 mm x 1.0 mm (thickness) . Fe plating of the same size (a copper plate was Fe-plated at a target thickness of 1.5 mm, and the plating layer was cut out to be 1.0 mm in thickness) was also prepared for comparison. A diluted flux 92 was a flux (HAKKO 001 (trade name) was used) diluted by a factor of 10 with isopropanol. Wire solder 94 to be melted having a size of φ1 mm × 40 mm was, made of Sn-3.0Ag-0.5Cu, and had been wound around a φ40-mm-round rod in advance so that it was curled.

Tests were performed by following the procedures as set forth below. Herein, 20 µl of the diluted flux 92 was dropped on the test specimen 90, and the wire solder 94 was placed thereon. The test specimen 90 was heated to 300 to 410°C in this state to melt the solder for 30 s. Subsequently, the test specimen 90 was cooled and a spread area of the wire solder 94 was measured. As the spread area is larger, wettability by solder is higher, that is, solderability is satisfactory.

A table below is a component table of seven kinds of test specimen 90 (Samples 101 through 107).

| Sample # | Name | Components | | | |
|---|---|---|---|---|---|
| | | Fe | Ni | Cu | C |
| 101 | Fe plating (comparison) | Plating | - | - | - |
| 102 | Fe-0.5C | Rest | - | - | 0.5 |
| 103 | Fe-8Ni-0.5C | Rest | 8 | - | 0.5 |
| 104 | Fe-42Ni-0.5C | Rest | 42 | - | 0.5 |
| 105 | *Fe | Rest (high-purity) | - | - | - |
| 106 | *Fe-10Ni | Rest (high-purity) | 10 | - | - |
| 107 | *Fe-5Cu | Rest (high-purity) | - | 5 | - |

| | | | | | |
|---|---|---|---|---|---|
| (*Fe indicates highly-purity Fe) (% by mass) | | | | | |

Sample 101 is a plate of an Fe-plated layer prepared using the method described above for comparison. Samples 102 through 107 were obtained by molding particles of respective components specified in the table by means of MIM followed by sintering. Samples 102 through 107 correspond, respectively, to Types 10, 12, 11, 13, 15, and 1 shown in FIG. 5. Samples 102 through 104 use iron powder of carbon steel normally used in MIM as a material. Meanwhile, Samples 105 through 107 use high-purity carbonyl iron dust (indicated by *Fe) as a material. For each sample, n = 3 was given as the n number.

FIG. 14 is a graph showing the results of the wet spreading test. The abscissa is used for temperatures (°C) and the ordinate is used for the spread area (mm²) of molten solder. As is shown in the graph, in comparison with the spread area (66.9 mm² at 360°C) of Sample 101 (Fe plating), the spread area of Sample 107 (*Fe-5Cu) was the largest, followed by Sample 106 (*Fe-10Ni) and Sample 104 (Fe-42Ni-0.5C). The spread areas of Sample 103 (Fe-8Ni-0.5C) and Sample 105 (*Fe) were substantially the same as that of Sample 101, and Sample 102 (Fe-0.5C) showed more or less a disadvantageous result.

From these results, it is confirmed that solderability is enhanced markedly compared to Fe plating when high-purity iron powder is used with addition of Ni and Cu. It is also confirmed that solderability is enhanced further by increasing a quantity of Ni to be added, and that Cu has a large effect when Cu is added in even a quantity smaller than that of Ni.

Results of corrosion resistance of the soldering bit 2 of this embodiment will now be described. Evaluations were made employing a corrosion test. The corrosion test was performed on Sample 104, Sample 106, and Sample 107, which showed large effects in the wet spreading test. These samples were molded into the shape of the soldering iron tip end member 20 shown in FIG. 3 by means of MIM followed by sintering, and the soldering bit 2 shown in FIG. 3 was manufactured by brazing the soldering iron tip end member 20 to the soldering bit core 10. The soldering bit 2 (Sample 101) by means of Fe plating was also manufactured for comparison.

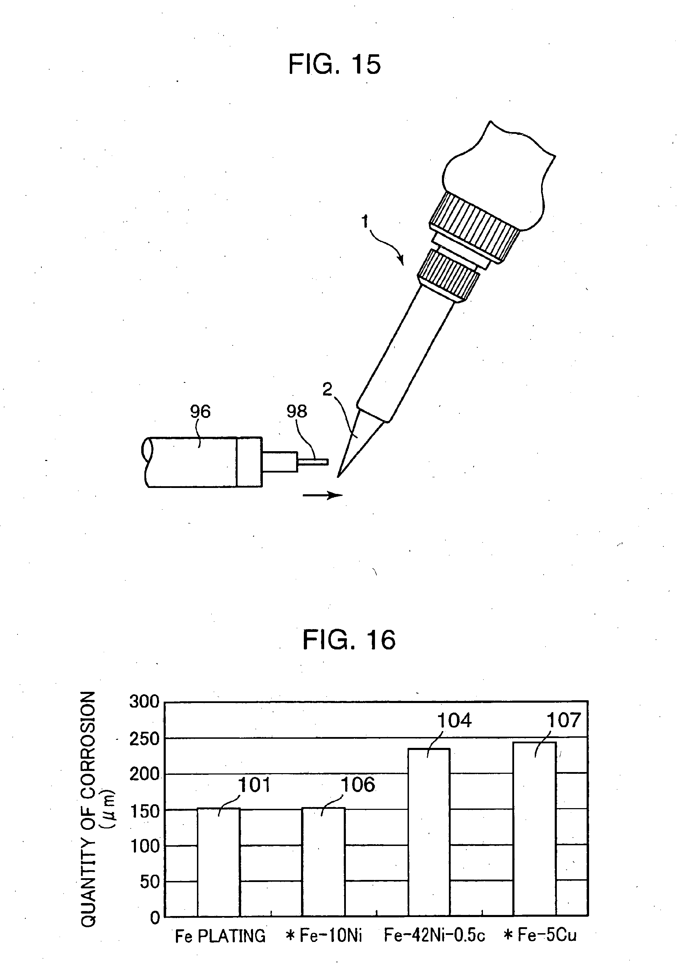

FIG. 15 is a view schematically showing a test device of the corrosion test. The device comprises the electric soldering iron 1 to which each of the soldering bits 2 manufactured as described above is attached, and a solder feeding device 96 that feeds solder to the electric soldering iron 1. Wire solder 98 (Sn-3.OAg-0.5Cu having φ1 mm, the same one used in the wet spreading test was used) is automatically fed from the forward end of the solder feeding device 96 in a direction indicated by an arrow. The electric soldering iron 1 is fixed with a tilt of 30° with respect to a plane perpendicular to the feeding direction of the wire solder 98. The point angle of the soldering bit 2 is 18°.

The set temperature of the soldering bit 2 was 400°C, and the wire solder 98 was fed from the solder feeding device 96 (set temperature: 30°C) by 5 mm at a time in every 3 s. The forward end of the wire solder 98 was brought into contact with the soldering bit 2 each time it was fed and was thereby melted. In association with this, the soldering bit 2 underwent corrosion slightly. After the feeding was performed 8000 times, a quantity of corrosion on the soldering bit 2 was measured. For each sample, n = 2 was given as the n number.

FIG. 16 is a graph showing the results of the corrosion test. The ordinate is used for a quantity of corrosion (µm) on the soldering bit 2. Sample 106 (*Fe-10Ni) had a quantity of corrosion almost as small as that of Sample 101 (Fe plating) . Sample 104 (Fe-4Ni-0.5C) and Sample 107 (*Fe-5Cu) had larger quantities of corrosion.

From the wet spreading test and the corrosion test, it is confirmed that Sample 106 (*Fe-10Ni) can enhance solderability markedly in comparison with the conventional counterpart while keeping corrosion resistance as good as that of the conventional counterpart. Hence, the soldering bit 2 equipped with Sample 106 is able to enhance solderability without deteriorating corrosion resistance.

It is also confirmed that solderability and corrosion resistance can be adjusted by changing ratios of the respective components. Although such cases were not included in the tests above, it is possible to enhance corrosion resistance without deteriorating solderability by adjusting components.

Further, a Vickers hardness test was performed on Sample 101, Sample 104, Sample 106, and Sample 107. When a hardness is too high, the soldering bit 2 is readily broken with a small impact, whereas when a hardness is too low, it is readily bent. The Vickers hardness is an important property next to solderability and the life. The hardness was measured under the conditions that loading of 5N was applied for 8 sec. For each sample, n = 3 was given as the n number.

A table below is a table showing the results of the Vickers hardness test.

| Sample # | Name | Hardness (HV) |
|---|---|---|
| 101 | Fe Plating (comparison) | 139 |
| 104 | Fe-42Ni-0.5C | 107 |
| 106 | *Fe-10Ni | 157 |
| 107 | *Fe-5Cu | 112 |

Sample 106 was slightly harder than Sample 101, and Sample 104 and Sample 107 had hardness of about 80% of that of Sample 101. From these results, it is confirmed that there is a strong correlation between the Vickers hardness and corrosion resistance, and corrosion resistance is higher as the hardness increases. It is also confirmed that Sample 106 (*Fe-10Ni) is suitable for the soldering iron tip end member 20 in terms of the Vickers hardness.

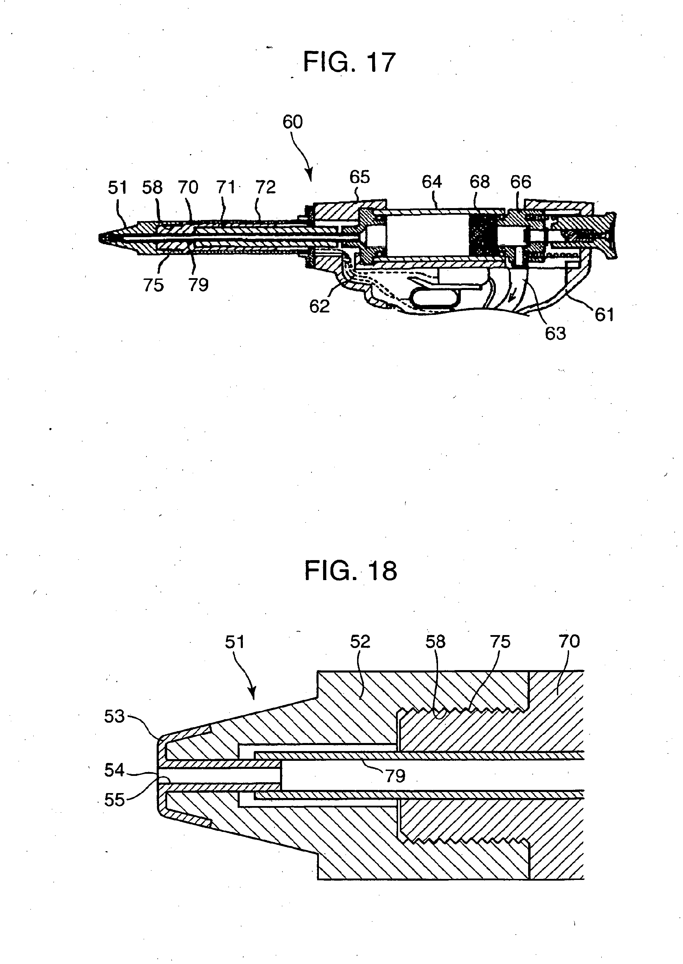

A second embodiment of the invention will now be described with reference to FIG. 17 and FIG. 18. FIG. 17 is a partial cross section of an electric solder sucking iron 60. Referring to the drawing, a tank 64 is provided to the upper portion of a main body case 61 in such a manner that it is inserted in a space between a front holder 65 and a rear holder 66 in a re-attachable manner. The tank 64 is a cylinder comprising a transparent body, such as heat-resistant glass, to allow observation from the outside, and retains sucked molten solder. A filter 68 made of glass wool is provided at the rear end of the tank 64, and the tank 64 communicates with the rear holder 66 via the filter 68. A vacuum tube 63 is connected to the rear holder 66, so that an internal pressure of the tank 64 can be reduced by an unillustrated vacuum pump.

The rear end of a transport pipe 79 that communicates with the tank 64 is inserted into the front holder 65. The transport pipe 79 is made of stainless . A rod-shaped forward end of the electric solder sucking iron 60 comprises a heating core 70 made of copper and provided with an inner hole through which the transport pipe 79 penetrates, a ceramic heater 71 provided in the interior of the heating core 70, a protective pipe 72 covering the outer circumference of the heating core 70, and a suction nozzle 51 (equivalent to the tip for handling solder) that is brought into direct contact with solder to melt and suck the solder. A male screw 75 is formed at the forward end of the heating core 70, and a female screw 58 threaded into the male screw 75 is formed at the rear end of the suction nozzle 51, thereby making the suction nozzle 51 re-attachable and replaceable. A through-hole 55 (see FIG. 18) is provided in the forward end of the suction nozzle 51 to communicate with the transport pipe 79. The ceramic heater 71 is connected to an unillustrated power supply cord via a lead wire 62.

When an unillustrated vacuum suction switch provided to the main body case 61 is turned ON, internal pressures of the tank 64 and the transport pipe 79 are reduced by the unillustrated vacuum pump. Also, when the power supply of the ceramic heater 71 is turned ON, the forward end of the suction nozzle 51 is heated. Solder is melted as the heated forward end is brought into contact with the solder. The molten solder is then sucked into the transport pipe 79 via the suction nozzle 51 through a suction inlet 54 (see FIG. 18). The molten solder thus sucked is sent to the interior of the tank 64 and retained therein. The tank 64 is re-attachable, and can be replaced as needed with an increasing quantity of retained molten solder.

FIG. 18 is an enlarged cross section showing the vicinity of the suction nozzle 51 of FIG. 17. The suction nozzle 51 comprises a soldering bit core 52 made of copper or a copper alloy, and a soldering iron tip end member 53 comprising a metal particle sintered body and provided at the forward end. The through-hole 55 is provided inside the soldering iron tip end member 53. The forward end opens toward the outside and thereby forms the suction inlet 54 through which molten solder is sucked, while the rear end is connected to the transportation pipe 79. In the conventional electric solder sucking iron, the outer circumference of the forward end of the suction nozzle is iron-plated, and an iron pipe used to form a through-hole is inserted into the interior. On the contrary, when configured similarly to this embodiment of the invention, the need for iron plating is eliminated by merely providing the soldering iron tip end member 53 at the forward end of the suction nozzle 51, which not only enhances productivity, but also lessens an emission of environmental pollutants.

Similarly to the soldering bit 2 of the first embodiment above, the suction nozzle 51 ensures wettability by solder and attains high resistance to corrosion by lead-free solder in comparison with conventional iron-plated articles, and is thereby able to extend the life.

The sintering components of the soldering iron tip end member 53, the manufacturing method of the suction nozzle 51 and the like follow those of the soldering bit 2 of the first embodiment.

While the soldering bit 2 and the electric soldering iron 1 using the same shown in the first embodiment, or the suction nozzle 51 and the electric solder sucking iron 60 using the same shown in the second embodiment, and the manufacturing methods thereof have been described, the invention is not limited to the embodiments above, and can be modified as needed within the scope of the appended claims.

For example, components of the soldering iron tip end member 20 and the soldering iron tip end member 53 are not limited to those specified in FIG. 5 and by Samples 102 through 107, and can be selected and adjusted as needed depending on the kinds of solder used or the purpose of use (for example, whether the priorities are placed on corrosion resistance or on solderability).

The ceramic heater 5 provided to the electric soldering iron 1 and the ceramic heater 71 provided to the electric solder sucking iron 60 are fixed to the main bodies in the respective embodiments. However, they may be housed in the soldering bit 2 and the suction nozzle 51, respectively, so that they can be replaced all together. When configured in this manner, a heater having optimum properties (a capacity of the heater or the like) can be used depending on the shape or a heat capacity of the soldering bit 2 or the suction nozzle 51.

Respective particles used as the sintering base material and the sintering additive are not limited to a mixture made by mixing independent particles. Particles may be alloyed, either partially or entirely, and particles of the alloy may be used. The melting process or mechanical alloying (MA) is applicable to alloying.

### INDUSTRIAL APPLICABILITY

As can be obvious from the descriptions above, the soldering bit of the invention is characterized in that a soldering iron tip end member, comprising a metal particle sintered body manufactured using the powder metallurgy process, is provided at the forward end of a soldering bit core made of copper or a copper alloy, and that the metal particle sintered body uses at least one element among iron, nickel, and cobalt as a principal component. Hence, not only is it possible to prevent corrosion by solder on the tip for handling solder and improve solderability or desolderability thereof when lead-free solder is used, but it is also possible to readily obtain materials of the soldering bit forward end that best suit the respective kinds of solder; moreover, an emission of environmental pollutants can be lessened.

## Claims

1. A soldering bit for an electric soldering iron or an electric solder sucking iron comprising a soldering bit core (10, 10a, 10b, 10c, 10d, 10e, 52) made of copper or copper alloy, **characterized in that**:
a soldering iron tip end member (20, 20a, 20b, 20c, 20d, 20e, 53) consisting of a metal particle sintered body is provided at a forward end of the soldering bit core (10, 10a, 10b, 10c, 10d, 10e, 52);
the metal particle sintered body is made of a sintering base material at a content by mass of 55% to 99.99%, and a sintering additive;
at least one of iron particles, nickel particles, and cobalt particles are used as the sintering base material; and
the sintering additive including a first sintering additive, and at least one of copper particles, silver particles, tin particles, boron particles, and carbon particles are used as the first sintering additive.

2. The soldering bit for an electric soldering iron or an electric solder sucking iron according to Claim 1, wherein:
the iron particles used as the sintering base material are iron powder having a purity of 99.5% or higher.

3. The soldering bit for an electric soldering iron or an electric solder sucking iron according to Claim 1 or 2, wherein:
the iron particles used as the sintering base material are electrolytic iron powder or carbonyl iron dust.

4. The soldering bit for an electric soldering iron or an electric solder sucking iron according to any of Claims 1 through 3, wherein:
the metal particle sintered body contains the first sintering additive at a content of 0.01% to 40%.

5. The soldering bit for an electric soldering iron or an electric solder sucking iron according to any of Claims 1 through 4, wherein the sintering additive further includes a second sintering additive, and at least one of, vanadium particles, niobium particles, tantalum particles, chromium particles, molybdenum particles, and tungsten particles are used as the second sintering additive.

6. The soldering bit for an electric soldering iron or an electric solder sucking iron according to any of Claims 1 to 5, wherein:
the metal particle sintered body contains the second sintering additive at a content of 0.01% to 5%.

7. The soldering bit for an electric soldering iron or an electric solder sucking iron according to any of Claims 1 through 6, wherein:
the metal particle sintered body is formed in a shape of a cap to be capped on the forward end of the soldering bit core (10, 10a, 10b, 10c, 10d, 10e, 52) and has a thickness of 200 to 800 µm.

8. The soldering bit for an electric soldering iron or an electric solder sucking iron according to any of Claims 1 through 7, wherein:
the metal particle sintered body has a relative density of 95% or higher.

9. The soldering bit for an electric soldering iron or an electric solder sucking iron according to any of Claims 1 through 8, further comprising:
a heating element (5) that electrically heats the soldering iron tip end member (20, 20a, 20b, 20c, 20d, 20e, 53) via the soldering bit core (10, 10a, 10b, 10c, 10d, 10e, 52), the heating element (5) being configured to be attached to an electric soldering iron or an electric solder sucking iron in a replaceable manner.

10. An electric soldering iron, **characterized by** being provided with the soldering bit for an electric soldering iron or an electric solder sucking iron according to any of Claims 1 through 9 in a replaceable manner.

11. An electric solder sucking iron, **characterized by** being provided with the soldering bit for an electric soldering iron or an electric solder sucking iron according to any of Claims 1 through 9 in a replaceable manner.

12. A manufacturing method of the soldering bit for an electric soldering iron or an electric solder sucking iron according to any of Claims 1 through 9, the method being **characterized by** comprising:
mixing the sintering base material or the sintering base material and the sintering additive according to any of Claims 1 through 6 using a binder;
forming a green compact by molding a resulting mixture to substantially an identical shape with a shape of the soldering iron tip end member (20, 20a, 20b, 20c, 20d, 20e, 53) or a shape surrounding the shape of the soldering iron tip end member (20, 20a, 20b, 20c, 20d, 20e, 53) by means of pressure molding;
sintering the green compact in a non-oxidative atmosphere at 800 to 1300°C to form the soldering iron tip end member (20, 20a, 20b, 20c, 20d, 20e, 53)comprising the metal particle sintered body; and
joining the soldering iron tip end member (20, 20a, 20b, 20c, 20d, 20e, 53) to the forward end of the soldering bit core (10, 10a, 10b, 10c, 10d, 10e, 52) made of copper or a copper alloy.

13. The manufacturing method according to Claim 12, wherein:
the metal particle sintered body is further shaped by means of preform forging or powder forging at a temperature of 300 to 500°C to form the soldering iron tip end member (20, 20a, 20b, 20c, 20d, 20e, 53).

14. The manufacturing method according to Claim 12 or 13, wherein:
injection molding is used instead of the pressure molding.

15. The manufacturing method according to Claim 12 or 13, wherein:
a process of subjecting metal particles alone to powder compression molding without mixing using the binder is used instead of the pressure molding.

16. The manufacturing method according to Claim 12 or 13, wherein:
liquid phase sintering is used, by which a sintering temperature is set at or above a melting point of the sintering additive.

17. The manufacturing method according to any of Claims 12 through 16, wherein:
alloy particles, formed by alloying at least two kinds of particles among particles used as the sintering base material and the sintering additive using a melting process or mechanical alloying, are used.

18. The manufacturing method according to any of Claims 12 through 17, wherein:
particles having a particle size of 200 µm or smaller are used as the sintering base material, the sintering additive, or the alloy particles.

19. The manufacturing method according to Claim 18, wherein:
particles having a particle size of 50 µm or smaller are used as the sintering base material, the sintering additive, or the alloy particles.

20. The manufacturing method according to Claim 19, wherein:
particles having a particle size of 10 µm or smaller are used as the sintering base material, the sintering additive, or the alloy particles.

21. The manufacturing method according to Claim 20, wherein:
ultra-fine particles are used as the sintering base material, the sintering additive, or the alloy particles.

## Patentansprüche

1. Lötspitze für ein elektrisches Löteisen oder ein elektrisches Lötsaugeisen, umfassend einen Lötspitzenkern (10, 10a, 10b, 10c, 10d, 10e, 52) aus Kupfer oder Kupferlegierung, **dadurch gekennzeichnet, daß**:
ein Löteisenspitzenendelement (20, 20a, 20b, 20c, 20d, 20e, 53), bestehend aus einem Metallteilchen-gesinterten Körper, an einem vorderen Ende des Lötspitzenkerns (10, 10a, 10b, 10c, 10d, 10e, 52) angeordnet ist,
der Metallteilchen-gesinterte Körper aus einem Sinterbasismaterial bei einem Massen-Anteil von 55% bis 99,99% und einem Sinteradditiv hergestellt ist,
mindestens eines von Eisenteilchen, Nickelteilchen und Kobaltteilchen als das Sinterbasismaterial verwendet wird, und
das Sinteradditiv ein erstes Sinteradditiv einschließt, und mindestens eines von Kupferteilchen, Silberteilchen, Zinnteilchen, Borteilchen und Kohlenstoffteilchen als das erste Sinteradditiv verwendet wird.

2. Lötspitze für ein elektrisches Löteisen oder ein elektrisches Lötsaugeisen gemäß Anspruch 1, wobei:
die Eisenteilchen, welche als das Sinterbasismaterial verwendet werden, Eisenpulver mit einer Reinheit von 99,5% oder höher sind.

3. Lötspitze für ein elektrisches Löteisen oder ein elektrisches Lötsaugeisen gemäß Anspruch 1 oder 2, wobei:
die Eisenteilchen, verwendet als das Sinterbasismaterial, elektrolytisches Eisenpulver oder Carbonyleisenstaub sind.

4. Lötspitze für ein elektrisches Löteisen oder ein elektrisches Lötsaugeisen gemäß einem der Ansprüche 1 bis 3, wobei:
der Metallteilchen-gesinterte Körper das erste Sinteradditiv bei einem Anteil von 0,01 % bis 40% enthält.

5. Lötspitze für ein elektrisches Löteisen oder ein elektrisches Lötsaugeisen gemäß einem der Ansprüche 1 bis 4, wobei das Sinteradditiv weiter ein zweites Sinteradditiv einschließt und mindestens eines von Vanadiumteilchen, Niobteilchen, Tantalteilchen, Chromteilchen, Molybdänteilchen und Wolframteilchen als das zweite Sinteradditiv verwendet wird.

6. Lötspitze für ein elektrisches Löteisen oder ein elektrisches Lötsaugeisen gemäß einem der Ansprüche 1 bis 5, wobei:
der Metallteilchen-gesinterte Körper das zweite Sinteradditiv bei einem Anteil von 0,05% bis 5% enthält.

7. Lötspitze für ein elektrisches Löteisen oder ein elektrisches Lötsaugeisen gemäß einem der Ansprüche 1 bis 6, wobei:
der Metallteilchen-gesinterte Körper in einer Form eines Hütchens, das auf das vordere Ende des Lötspitzenkerns (10, 10a, 10b, 10c, 10d, 10e, 52) gekrönt wird und eine Dicke von 200 bis 800 µm aufweist, gebildet ist.

8. Lötspitze für ein elektrisches Löteisen oder ein elektrisches Lötsaugeisen gemäß einem der Ansprüche 1 bis 7, wobei:
der Metallteilchen-gesinterte Körper eine relative Dichte von 95% oder höher aufweist.

9. Lötspitze für ein elektrisches Löteisen oder ein elektrisches Lötsaugeisen gemäß einem der Ansprüche 1 bis 8, weiter umfassend:
ein Heizelement (5), das elektrisch das Löteisenspitzenendelement (20, 20a, 20b, 20c, 20d, 20e, 52) erwärmt, wobei das Heizelement (5) konfiguriert ist, an ein elektrisches Löteisen oder ein elektrisches Lötsaugeisen in einer austauschbaren Weise angeordnet zu werden.

10. Elektrisches Löteisen, **gekennzeichnet dadurch, daß** es mit der Lötspitze für ein elektrisches Löteisen oder ein elektrisches Lötsaugeisen gemäß einem der Ansprüche 1 bis 9 in einer austauschbaren Weise versehen ist.

11. Elektrisches Lötsaugeisen, **gekennzeichnet dadurch, daß** es mit der Lötspitze für ein elektrisches Löteisen oder ein elektrisches Lötsaugeisen gemäß einem der Ansprüche 1 bis 9 in einer austauschbaren Weise versehen ist.

12. Herstellungsverfahren bezüglich der Lötspitze für ein elektrisches Löteisen oder ein elektrisches Lötsaugeisen gemäß einem der Ansprüche 1 bis 9, wobei das Verfahren gekennzeichnet ist zu umfassen:
das Mischen des Sinterbasismaterials oder des Sinterbasismaterials und des Sinteradditivs gemäß einem der Ansprüche 1 bis 6 unter Verwendung eines Bindemittels,
das Bilden eines Grünpresslings durch Formen eines resultierenden Gemisches zu einer im wesentlichen identischen Form mit einer Form des Löteisenspitzen-endelements (20, 20a, 20b, 20c, 20d, 20e, 53) oder einer Form, umgebend die Form des Löteisenspitzenendelements (20, 20a, 20b, 20c, 20d, 20e, 53), mittels Pressformens,
das Sintern des Grünpresslings in einer nicht-oxidierenden Atmosphäre bei 800 bis 1300°C unter Bildung des Löteisenspitzenendelements (20, 20a, 20b, 20c, 20d, 20e, 53), umfassend den Metallteilchen-gesinterten Körper, und
das Verbinden des Löteisenspitzenendelements (20, 20a, 20b, 20c, 20d, 20e, 53) an das vordere Ende des Lötspitzenkerns (10, 10a, 10b, 10c, 10d, 10e, 52) aus Kupfer oder einer Kupferlegierung.

13. Herstellungsverfahren gemäß Anspruch 12, wobei:
der Metallteilchen-gesinterte Körper weiter mittels eines Vorformschmiedens oder Pulverschmiedens bei einer Temperatur von 300 bis 500°C unter Bildung des Löteisenspitzenendelements (20, 20a, 20b, 20c, 20d, 20e, 53) geformt wird.

14. Herstellungsverfahren gemäß Anspruch 12 oder 13, wobei:
Spritzgießen anstelle von Pressformen verwendet wird.

15. Herstellungsverfahren gemäß Anspruch 12 oder 13, wobei:
ein Verfahren des Unterwerfens von Metallteilchen allein einem Pulverkomprimierungsformen ohne das Mischen unter Verwendung des Bindemittels anstelle des Pressformens verwendet wird.

16. Herstellungsverfahren gemäß Anspruch 12 oder 13, wobei:
Flüssigphasensintern verwendet wird, wobei eine Sintertemperatur bei oder oberhalb eines Schmelzpunkts des Sinteradditivs eingestellt wird.

17. Herstellungsverfahren gemäß einem der Ansprüche 12 bis 16, wobei:
Legierungsteilchen, gebildet durch Legieren von mindestens zwei Arten von Teilchen unter den Teilchen, verwendet als das Sinterbasismaterial und das Sinteradditiv, unter Verwendung eines Schmelzverfahrens oder mechanischen Legierens, verwendet werden.

18. Herstellungsverfahren gemäß einem der Ansprüche 12 bis 17, wobei:
Teilchen mit einer Teilchengröße von 200 µm oder kleiner als das Sinterbasismaterial, das Sinteradditiv oder die Legierungsteilchen verwendet werden.

19. Herstellungsverfahren gemäß Anspruch 18, wobei:
Teilchen mit einer Teilchengröße von 50 µm oder kleiner als das Sinterbasismaterial, das Sinteradditiv oder die Legierungsteilchen verwendet werden.

20. Herstellungsverfahren gemäß Anspruch 19, wobei:
Teilchen mit einer Teilchengröße von 10 µm oder kleiner als das Sinterbasismaterial, das Sinteradditiv oder die Legierungsteilchen verwendet werden.

21. Herstellungsverfahren gemäß Anspruch 20, wobei:
ultrafeine Teilchen als das Sinterbasismaterial, das Sinteradditiv oder die Legierungsteilchen verwendet werden.

## Revendications

1. Embout de soudage pour un fer à souder électrique ou un fer d'aspiration de soudure électrique comprenant un noyau d'embout de soudage (10, 10a, 10b, 10c, 10d, 10e, 52) réalisé en cuivre ou en alliage de cuivre, **caractérisé en ce que** :
un élément d'extrémité en pointe de fer à souder (20, 20a, 20b, 20c, 20d, 20e, 53), constitué par un corps fritté à base de particules métalliques, est agencé à une extrémité avant du noyau d'embout de soudage (10, 10a, 10b, 10e, 10d, 10e, 52) ;
le corps fritté à base de particules métalliques est constitué par un matériau de base de frittage avec une teneur en masse de 55 % à 99,99 %, et un additif de frittage ;
au moins un type de particules parmi des particules de fer, des particules de nickel, et des particules de cobalt est utilisé pour le matériau de base de frittage ; et
l'additif de frittage comportant un premier additif de frittage, et au moins un type parmi des particules de cuivre, des particules d'argent, des particules d'étain, des particules de bore, et des particules de carbone est utilisé pour le premier additif de frittage.

2. Embout de soudage pour un fer à souder électrique ou un fer d'aspiration de soudure électrique selon la revendication 1, dans lequel :
les particules de fer utilisées pour le matériau de base de frittage sont à base de poudre de fer présentant une pureté supérieure ou égale à 99,5 %.

3. Embout de soudage pour un fer à souder électrique ou un fer d'aspiration de soudure électrique selon la revendication 1 ou 2, dans lequel :
les particules de fer utilisées pour le matériau de base de frittage sont à base de poudre de fer électrolytique ou de carbonyle de fer pulvérulent.

4. Embout de soudage pour un fer à souder électrique ou un fer d'aspiration de soudure électrique selon l'une quelconque des revendications 1 à 3, dans lequel :
le corps fritté à base de particules métalliques contient le premier additif de frittage à une teneur de 0,01 % à 40 %.

5. Embout de soudage pour un fer à souder électrique ou un fer d'aspiration de soudure électrique selon l'une quelconque des revendications 1 à 4, dans lequel l'additif de frittage comporte, en outre, un second additif de frittage, et au moins un type de particules parmi des particules de vanadium, des particules de niobium, des particules de tantale, des particules de chrome, des particules de molybdène, et des particules de tungstène est utilisé pour le second additif de frittage.

6. Embout de soudage pour un fer à souder électrique ou un fer d'aspiration de soudure électrique selon l'une quelconque des revendications 1 à 5, dans lequel :
le corps fritté à base de particules métalliques contient le second additif de frittage avec une teneur de 0,01 % à 5 %.

7. Embout de soudage pour un fer à souder électrique ou un fer d'aspiration de soudure électrique selon l'une quelconque des revendications 1 à 6, dans lequel :
le corps fritté à base de particules métalliques est réalisé en une forme de capsule de manière à recouvrir l'extrémité avant du noyau d'embout de soudage (10, 10a, 10b, 10c, 10 d, 10 e, 52) et présente une épaisseur de 200 à 800 µm.

8. Embout de soudage pour un fer à souder électrique ou un fer d'aspiration de soudure électrique selon l'une quelconque des revendications 1 à 7, dans lequel :
le corps fritté à base de particules métalliques présente une densité relative supérieure ou égale à 95%.

9. Embout de soudage pour un fer à souder électrique ou un fer d'aspiration de soudure électrique selon l'une quelconque des revendications 1 à 8, comprenant, en outre :
un élément chauffant (5) qui chauffe électriquement l'élément d'extrémité en pointe de fer à souder (20, 20a, 20b, 20c, 20d, 20e, 53) par l'intermédiaire du noyau d'embout de soudage (10, 10a, 10b, 10c, 10d, 10e, 52), l'élément chauffant (5) étant configuré de manière à être fixé sur un fer à souder électrique ou un fer d'aspiration de soudure électrique de manière à pouvoir être remplacé.

10. Fer à souder électrique **caractérisé en ce qu'**il comporte l'embout de soudage pour un fer à souder électrique ou un fer d'aspiration de soudure électrique selon l'une quelconque des revendications 1 à 9, de manière à pouvoir être remplacé.

11. Fer d'aspiration de soudure électrique **caractérisé en ce qu'**il comporte l'embout de soudage pour un fer à souder électrique ou un fer d'aspiration de soudure électrique selon l'une quelconque des revendications 1 à 9, de manière à pouvoir être remplacé.

12. Procédé de fabrication de l'embout de soudage pour un fer à souder électrique ou un fer d'aspiration de soudure électrique selon l'une quelconque des revendications 1 à 9, le procédé étant **caractérisé en ce qu'**il comprend :
le mélange du matériau de base de frittage ou du matériau de base de frittage et de l'additif de frittage selon l'une quelconque des revendications 1 à 6 en utilisant un agent liant ;
la formation d'une ébauche comprimée verte par moulage d'un mélange résultant sensiblement à une forme identique à une forme de l'élément d'extrémité en pointe de fer à souder (20, 20a, 20b, 20c, 20d, 20e, 53) ou une forme enveloppant la forme de l'élément d'extrémité en pointe de fer à souder (20, 20a, 20b, 20c, 20d, 20e, 53) par moulage sous pression ;
le frittage de l'ébauche comprimée verte sous une atmosphère non oxydante entre 800 et 1300°C afin de former l'élément d'extrémité en pointe de fer à souder (20, 20a, 20b, 20c, 20d, 20e, 53) comprenant le corps fritté à base de particules métalliques ; et
la liaison de l'élément d'extrémité en pointe de fer à souder (20, 20a, 20b, 20c, 20d, 20e, 53) à l'extrémité du noyau d'embout de soudage (10, 10a, 10b, 10e, 10d, 10e, 52) réalisé en cuivre ou en alliage de cuivre.

13. Procédé de fabrication selon la revendication 12, dans lequel :
le corps fritté à base de particules métalliques est en outre façonné par forgeage d'ébauche ou forgeage de poudre à une température de 300 à 500°C afin de former l'élément d'extrémité en pointe de fer à souder (20, 20a, 20b, 20c, 20d, 20e, 53).

14. Procédé de fabrication selon la revendication 12 ou 13, dans lequel :
le moulage par injection est utilisé à la place du moulage sous pression.

15. Procédé de fabrication selon la revendication 12 ou 13, dans lequel :
un procédé consistant à soumettre des particules métalliques seules à un moulage par compression de poudre, sans mélange en utilisant l'agent liant, est utilisé à la place du moulage sous pression.

16. Procédé de fabrication selon la revendication 12 ou 13, dans lequel :
un frittage en phase liquide est utilisé, par lequel la température de frittage est réglée à une température supérieure ou égale à celle du point de fusion de l'additif de frittage.

17. Procédé de fabrication selon l'une quelconque des revendications 12 à 16, dans lequel :
des particules d'alliage, constituées par alliage d'au moins deux types de particules parmi les particules utilisées pour le matériau de base de frittage et l'additif de frittage en utilisant un procédé de fusion ou d'alliage métallique sont utilisées.

18. Procédé de fabrication selon l'une quelconque des revendications 12 à 17, dans lequel :
des particules présentant une taille de particule inférieure ou égale à 200 µm sont utilisées pour le matériau de base de frittage, l'additif de frittage ou les particules d'alliage.

19. Procédé de fabrication selon la revendication 18, dans lequel :
des particules présentant une taille de particule inférieure ou égale à 50 µm sont utilisées pour le matériau de base de frittage, l'additif de frittage ou les particules d'alliage.

20. Procédé de fabrication selon la revendication 19, dans lequel :
des particules présentant une taille de particule inférieure ou égale à 10 µm sont utilisées pour le matériau de base de frittage, l'additif de frittage ou les particules d'alliage.

21. Procédé de fabrication selon la revendication 20, dans lequel :
des particules ultra-fines sont utilisées pour le matériau de base de frittage, l'additif de frittage ou les particules d'alliage.
